# EUROPÄISCHE PATENTANMELDUNG

(11) **EP 0 556 474 A1**
(43) Veröffentlichungstag der Anmeldung: **25.08.1993**
(21) Anmeldenummer: 92121109.0
(22) Anmeldetag: 11.12.1992
(51) Int. Cl.: G01N 1/12

(54) **Tauchprobennehmer für Metallschmelze**

(30) Priorität: 19.02.1992 DE 4204952
(71) Anmelder: Heraeus Electro-Nite International N.V., B-2000 Antwerpen (BE)
(72) Erfinder: Cure, Omer Paul Ivo, B-3590 Diepenbeek (BE); Bernard, Paul Christina, NL-6231 LS Meerssen (NL)

(57) **Zusammenfassung**

Die Erfindung betrifft einen Tauchprobennehmer für Metallschmelze mit einem röhrchenförmigen Probennehmer aus Quarzglas oder einem feuerfesten Material mit einer Einlauföffnung (6) an dem einen Ende, wobei das der Einlauföffnung gegenüberliegende Ende der Probenkammer (1) in einem Papprohr gehaltert ist. Um einen Tauchprobennehmer für Metallschmelze zu schaffen, bei dem mit einem einfachen Aufbau eine Probennahme mit geringer Einströmgeschwindigkeit unter Verhinderung der Bildung von Lunkern und Nadelstichporen in der Probe ermöglicht wird, weist die Einlauföffnung zur Füllung der Probenkammer ausschließlich über den ferrostatischen Druck einen freien Querschnitt gegenüber dem Querschnitt der Probenkammer unmittelbar hinter der Einlauföffnung, entgegen der Tauchrichtung gesehen, auf, der so groß gewählt ist, daß die Füllgeschwindigkeit der Probenkammer höchstens ein Fünftel derjenigen Füllgeschwindigkeit aufgrund des ferrostatischen Druckes bei einer Einlauföffnung entsprechend dem Querschnitt der Probenkammer im Bereich hinter der Einlauföffnung beträgt, und daß die Einlauföffnung derart angeordnet ist, daß die einlaufende Schmelze unter einem Winkel zu der Längsachse der Probenkammer, der größer als 0° ist, einströmt.

## Beschreibung

Die Erfindung betrifft einen Tauchprobennehmer für Metallschmelze mit einer röhrchenförmigen Probenkammer aus Quarzglas oder einem feuerfesten Material mit einer Einlauföffnung an dem einen Ende, wobei das der Einlauföffnung gegenüberliegende Ende der Probenkammer in einem Papprohr gehaltert ist.

Ein derartiger Tauchprobennehmer ist aus der DE-OS 24 06 764 bekannt. Der hier beschriebene Tauchprobennehmer dient der Bestimmung des Gasgehaltes einer Metallschmelze. Er weist eine Probenkammer auf, der eine weitere Kammer vorgelagert ist, in der eine Druckregelung mittels eines Inertgasstromes erfolgt. Dadurch wird die Einlaufgeschwindigkeit der Metallschmelze in die Probenkammer geregelt. Dazu werden eine Gaszuführung und eine Vakuumkammer über Ventile mit der Vorkammer des Tauchprobennehmers verbunden, so daß wahlweise der Druck in dem Tauchprobennehmer erhöht oder vermindert werden kann. Durch diese Druckregelung wird der Zeitpunkt des Einfließens der Metallschmelze in die Probenkammer so gewählt, daß ein Eindringen von Schlacke in die Probenkammer verhindert wird. Im Bereich des Einlaufs der Schmelze in die Probenkammer befindet sich eine Verengung, welche den Verschluß der Probenkammer nach erfolgter Probennahme dadurch bewirken soll, daß an dieser Stelle die Metallschmelze sehr schnell erstarrt. Tauchprobennehmer dieser Art sind relativ aufwendig, da sie Mittel zur Zufuhr beziehungsweise Evakuierung von Gasen erfordern, um eine Druckregulierung zu ermöglichen. Um die Gasführung an der Probenkammer vorbei zu ermöglichen, weisen derartige Tauchprobennehmer eine relativ komplizierte Gestaltung ihres Eintauchendes auf.

Ein weiterer Tauchprobennehmer ist aus der DE-AS 12 66 024 bekannt. In dieser Schrift ist beschrieben, daß die Regelung des Gasdruckes in der Probenkammer durch eine Kolben-Zylinder-Anordnung erfolgt. Durch diese Druckregelung wird die Einlaufgeschwindigkeit der Metallschmelze in die Probenkammer reguliert, so daß die Bildung von Lunkern oder Blasen in der Probe verhindert wird. Ein derartiger Tauchprobennehmer weist ebenfalls einen hohen apparativen Aufwand auf.

Der vorliegenden Erfindung liegt die Aufgabe zugrunde, einen Tauchprobennehmer für Metallschmelze zu schaffen, bei dem mit einem einfachen Aufbau eine Probennahme mit geringer Einströmgeschwindigkeit ermöglicht wird unter Verhinderung der Bildung von Lunkern und Nadelstichporen in der Probe.

Die Aufgabe wird für den eingangs charakterisierten Tauchprobennehmer erfindungsgemäß dadurch gelöst, daß zur Füllung der Probenkammer ausschließlich über den ferrostatischen Druck die Einlauföffnung einen freien Querschnitt über dem Querschnitt der Probenkammer unmittelbar hinter der Einlauföffnung, entgegen der Eintauchrichtung gesehen, aufweist, der so groß gewählt ist, daß die Füllgeschwindigkeit der Probenkammer höchstens ein Fünftel derjenigen Füllgeschwindigkeit aufgrund des ferrostatischen Druckes bei einer Einlauföffnung entsprechend dem Querschnitt der Probenkammer im Bereich hinter der Einlauföffnung beträgt, und daß die Einlauföffnung derart angeordnet ist, daß die einlaufende Schmelze unter einem Winkel zu der Längsachse der Probenkammer, der größer als 0° ist, einströmt. Durch eine derartige Reduzierung der Füllgeschwindigkeit mit einfachen konstruktiven Mitteln läuft die Metallschmelze ohne zu spritzen in die Probenkammer ein. Dabei wird die Probenkammer sehr gleichmäßig mit der Metallschmelze ausgefüllt, so daß die Entstehung von Lunkern und Nadelstichporen verhindert wird. Die Probe bildet dabei eine sehr glatte Oberfläche aus. Die Einlauföffnung kann der Einfachheit halber durch Sägen oder Fräsen erzeugt werden, so daß sie schlitzförmig ausgebildet ist. Für einen gleichmäßigen Einlauf hat sich dabei die Anordnung dieser schlitzförmigen Einlauföffnung senkrecht zur Längsachse der Probenkammer als zweckmäßig erwiesen. Es besteht jedoch auch die Möglichkeit, die Einlauföffnung beispielsweise in Form einer Bohrung auszubilden. Durch die erfindungsgemäße seitliche Anordnung der Einlauföffnung wird auch die Gefahr des Eindringens von Verunreinigungen, wie zum Beispiel von Teilchen einer eventuell vorhandenen und die Probenkammer während des Eintauchens des Tauchprobennehmers in die Metallschmelze schützenden Kappe vermindert. Mit einem derartigen Tauchprobennehmer ist es nicht nur möglich, den Gasgehalt von Metallschmelzen, wie z. B. den Sauerstoff- oder Stickstoffgehalt zu bestimmen, sondern es ist aufgrund der hohen Probenqualität auch möglich, die Konzentration anderer Elemente, wie Kohlenstoff und Schwefel mit hoher Genauigkeit reproduzierbar zu bestimmen. Dies wäre nicht der Fall, wenn die Probe mit Verunreinigungen, wie beispielsweise Lunkern, durchsetzt wäre. Die Probennahme und Bereitstellung zur Analyse nimmt nur sehr wenig Zeit in Anspruch, so daß auf Veränderungen im Prozeß der Metallherstellung schnell reagiert werden kann und eine hohe Qualität des Metalles nach dem Schmelzprozeß erzielt wird.

Als vorteilhaft hat es sich erwiesen, daß die Einströmrichtung mit der Längsachse der Probenkammer einen Winkel zwischen 30° und 150°, insbesondere einen Winkel zwischen 80° und 100° entgegen der Eintauchrichtung, einschließt. Dabei ist die Einlauföffnung außerhalb des Schnittpunktes der Längsachse der Probenkammer mit dem Ende der Probenkammer angeordnet, beispielsweise an der zylindrischen Seitenfläche der röhrchenförmigen Probenkammer. Bei einer derart angeordneten Einlauföffnung werden Reste einer in der Metallschmelze zerstörten Schutzkappe nicht in die Probenkammer eindringen, sondern an der Einlauföffnung vorbeiströmen.

Für eine ausreichende Reduzierung der Füllgeschwindigkeit ist es vorteilhaft, daß die freie Querschnittsfläche der Einlauföffnung zwischen 0,4 und 3 mm² beträgt. Dabei ist es zweckmäßig, daß die kleinste Öffnungsweite der Einlauföffnung mindestens 0,1 mm beträgt.

Vorteilhafterweise ist das eintauchende Ende der Probenkammer derart gestaltet, daß es einen sich verjüngenden Querschnitt aufweist. Insbesondere kann dieses Ende abgerundet geschlossen sein. Dadurch wird das Strömungsverhalten der Metallschmelze im Bereich der Einlauföffnung während des Eintauchvorganges verbessert.

In einer vorteilhaften Ausführung der Erfindung ist in das dem Eintauchende gegenüberliegenden Ende der Probenkammer ein offenporiger, den Querschnitt der Probenkammer ausfüllender Stopfen eingesetzt. Dieser Stopfen ist vorteilhafterweise aus Formsand oder Siliziumkarbid gebildet, d. h. er ist gasdurchlässig, aber undurchlässig für die Schmelze. Durch einen solchen gasdurchlässigen Stopfen können während des Füllvorganges der Probenkammer Gase aus der Probenkammer entweichen, so daß ein gleichmäßiger Füllvorgang, insbesondere eine gleichmäßige Füllgeschwindigkeit gewährleistet ist.

Nachstehend wird eine Ausführungsform für einen erfindungsgemäßen Tauchprobennehmer anhand einer Zeichnung näher erläutert. In der Zeichnung zeigen
- Figur 1: eine schematische Darstellung des Tauchprobennehmers im Schnitt
- Figur 2: eine schematische Darstellung des Eintauchendes der Probenkammer und
- Figur 3: eine schematische Darstellung des Eintauchendes der Probenkammer, gegenüber Figur 2 um 90° gedreht.

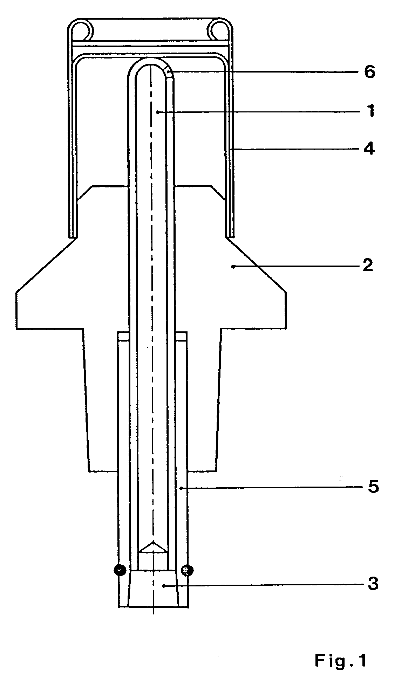

Der in Figur 1 gezeigte Tauchprobennehmer weist eine röhrchenförmige Probenkammer 1 auf, die an ihrem dem Eintauchende abgewandten Ende in einem rotationssymmetrischen Formkörper 2 aus feuerfestem Material, wie z. B. Formsand eingebettet ist. Dieser Formkörper 2 dient der Halterung der Probenkammer 1 in einem in der Zeichnung nicht dargestellten Papprohr. Das derart gehalterte Ende der Probenkammer 1 ist mit einem porösen Stopfen 3 aus Formsand geschlossen. Das Eintauchende der Probenkammer ist durch eine auf den Formkörper 2 aufgesteckte Schutzkappe 4 während des Eintauchens des Tauchprobennehmers in die Metallschmelze geschützt. In der Metallschmelze wird diese Schutzkappe 4 dann zerstört, so daß die Probenkammer 1 mit der Metallschmelze in Berührung kommt. An ihrem dem Eintauchende abgewandten Ende ist die Probenkammer 1 zusätzlich von einem Metallröhrchen 5 umgeben, das die Stabilität der Probenkammer 1 erhöht und als gasdichtes Kupplungsstück für eine nicht dargestellte Lanze dienen kann.

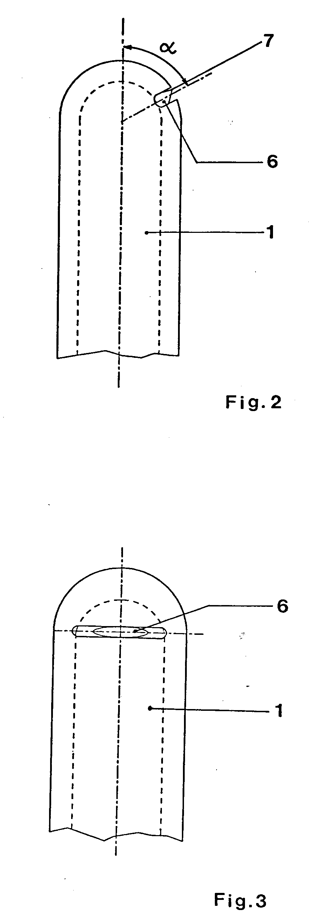

In den Figuren 2 und 3 ist das Eintauchende der Probenkammer 1 mit der Einlauföffnung 6 dargestellt. Die Probenkammer 1 ist röhrchenförmig mit einem Innendurchmesser von 4 mm und einer Länge von etwa 70 mm. Das Eintauchende derProbenkammer 1 ist bogenförmig geschlossen. Im Bereich des Überganges zwischen dem bogenförmigen Verschluß und der zylindrischen Seitenwand der Probenkammer ist die Einlauföffnung in Form eines sich senkrecht zur Längsachse der Probenkammer 1 erstreckenden Schlitzes angeordnet. Diese schlitzförmige Einlauföffnung 6 wird durch Sägen oder Fräsen hergestellt. Sie weist eine freie Querschnittsfläche von etwa 1,5 mm² auf. Die kleinste Öffnungsweite der Einlauföffnung 6 beträgt etwa 0,5 mm.

Die Einströmrichtung der Metallschmelze wird durch die Richtung der Schnittkanten 7 der Einlauföffnung 6 in Bezug auf die Längsachse der Probenkammer bestimmt. Diese Schnittkanten 7 verlaufen parallel zueinander und schließen mit der Eintauchrichtung der Probenkammer 1 einen Winkel α von etwa 80° bis 90° ein, so daß die Schmelze entgegen der Eintauchrichtung in die Probenkammer 1 einläuft.

Durch die sehr kleine, seitlich angeordnete Einlauföffnung 6 fließt die Schmelze nach Zerstörung der Schutzkappe 4 sehr langsam in die Probenkammer 1 ein (die Füllzeit beträgt etwa 0,8 Sekunden; dies bedeutet gegenüber einer Füllzeit von etwa 0,09 Sekunden bei einer Einlauföffnung, deren Querschnittsfläche ebenso groß ist wie die Querschnittsfläche der Probenkammer eine Reduzierung der Füllgeschwindigkeit um etwa den Faktor 9). Der Einlauf der Metallschmelze in die Probenkammer 1 erfolgt dadurch sehr gleichmäßig und damit füllt sich die Probenkammer 1 mit der Metallschmelze frei von Lunkern und Nadelstichporen, wodurch nach ihrem Erstarren eine Probe mit sehr glatter Oberfläche entsteht. Durch die seitliche Anordnung der Einlauföffnung 6 wird auch verhindert, daß Reste der zerstörten Schutzkappe 4 in die Probenkammer 1 eindringen, da solche Verunreinigungsteilchen durch die Eintauchbewegung des Tauchprobennehmers sich an der Einlauföffnung 6 vorbei bewegen.

Die Wandstärke der Probenkammer 1 beträgt etwa 1 mm. Bei dieser Stärke weist sie im Hinblick auf die kleine Einlauföffnung 6 eine so hohe Wärmekapazität auf, daß die Metallschmelze vorerst In der gegenüber der Metallschmelze kälteren Einlauföffnung 6 erstarrt. Nach Aufheizen der Probenkammer 1 schmilzt die in der Einlauföffnung 6 erstarrte Metallschmelze und gibt die Einlauföffnung 6 frei. Das erfolgt erst in einer zur Probennahme geeigneten Eintauchtiefe. Zu diesem Zeitpunkt sind die Reste der Schutzkappe 4, bedingt durch die Tauchbewegung, bereits aus dem Bereich der Einlauföffnung 6 entfernt.

## Patentansprüche

1. Tauchprobennehmer für Metallschmelze mit einer röhrchenförmigen Probenkammer aus Quarzglas oder einem feuerfesten Material mit einer Einlauföffnung an dem einen Ende, wobei das der Einlauföffnung gegenüberliegende Ende der Probenkammer in einem Papprohr gehaltert ist, dadurch gekennzeichnet, daß zur Füllung der Probenkammer (1) ausschließlich über den ferrostatischen Druck die Einlauföffnung (6) einen freien Querschnitt gegenüber dem Querschnitt der Probenkammer (1) unmittelbar hinter der Einlauföffnung (6), entgegen der Eintauchrichtung gesehen, aufweist, der so groß gewählt ist, daß die Füllgeschwindigkeit der Probenkammer (1) höchstens ein fünftel derjenigen Füllgeschwindigkeit aufgrund des ferrostatischen Druckes bei einer Einlauföffnung (6) entsprechend dem Querschnitt der Probenkammer (1) im Bereich hinter der Einlauföffnung (6) beträgt, und daß die Einlauföffnung (6) derart angeordnet ist, daß die einlaufende Schmelze unter einem Winkel (α) zu der Längsachse der Probenkammer (1), der größer als 0° ist, einströmt.

2. Tauchprobennehmer nach Anspruch 1, dadurch gekennzeichnet, daß die Einströmrichtung mit der Längsachse der Probenkammer (1) einen Winkel (α) zwischen 30° und 150° einschließt.

3. Tauchprobennehmer nach Anspruch 2, dadurch gekennzeichnet, daß die Einlauföffnung (6) derart angeordnet ist, daß die Schmelze entgegen der Eintauchrichtung unter einem Winkel (α) zwischen 80° und 100° einströmt.

4. Tauchprobennehmer nach einem der Ansprüche 1 bis 3, dadurch gekennzeichnet, daß die freie Querschnittsfläche zwischen 0,4 bis 3 mm² beträgt.

5. Tauchprobennehmer nach einem der Ansprüche 1 bis 4, dadurch gekennzeichnet, daß die kleinste Öffnungsweite der Einlauföffnung (6) mindestens 0,1 mm beträgt.

6. Tauchprobennehmer nach einem der Ansprüche 1 bis 5, dadurch gekennzeichnet, daß das eintauchende Ende der Probenkammer (1) einen sich verjüngenden Querschnitt aufweist.

7. Tauchprobennehmer nach Anspruch 6, dadurch gekennzeichnet, daß das eintauchende Ende der Probenkammer (1) geschlossen abgerundet ist.

8. Tauchprobennehmer nach einem der Ansprüche 1 bis 7, dadurch gekennzeichnet, daß in das dem Eintauchende gegenüberliegenden Ende der Probenkammer (1) ein offenporiger, den Querschnitt der Probenkammer (1) ausfüllender Stopfen (3) eingesetzt ist.

9. Tauchprobennehmer nach Anspruch 8, dadurch gekennzeichnet, daß der Stopfen (3) aus Formsand ist.
